# EUROPEAN PATENT APPLICATION

(11) **EP 4 761 454 A1**
(43) Date of publication of application: **17.06.2026**
(21) Application number: 24870054.4
(22) Date of filing: 25.07.2024
(51) Int. Cl.: H04W 76/19

(54) **COMMUNICATION CONNECTION METHOD AND TERMINAL DEVICE**

(30) Priority: 25.09.2023 CN 202311249189; 30.01.2024 CN 202410136080
(71) Applicant: Honor Device Co., Ltd., Shenzhen, Guangdong 518040 (CN)
(72) Inventor: DI, Zichao, Shenzhen, Guangdong 518040 (CN); ZHAO, Chen, Shenzhen, Guangdong 518040 (CN); WANG, Yue, Shenzhen, Guangdong 518040 (CN)
(74) Representative: MERH-IP Matias Erny Reichl Hoffmann Patentanwälte PartG mbB
(86) International application number: PCT/CN2024/107574
(87) International publication number: WO 2025/066500

(57) **Abstract**

This application provides a communication connection method and a terminal device, and pertains to the field of mobile phone device communication. The method includes: when there is a Wi-Fi disconnection event, obtaining a disconnection reason code corresponding to the Wi-Fi disconnection event, where the disconnection reason code indicates a reason why a Wi-Fi connection drops, and the Wi-Fi disconnection event is that the Wi-Fi connection between a first AP and a terminal device drops; and reconnecting to the first AP based on the disconnection reason code. This method can be used to address poor user experience caused by frequent Wi-Fi disconnection.

## Description

This application claims priorities to Chinese Patent Application No. 202311249189.3, filed with the China National Intellectual Property Administration on September 25, 2023 and entitled "COMMUNICATION CONNECTION METHOD IN WIFI ROAMING SCENARIO, TERMINAL DEVICE, AND CHIP SYSTEM", and to Chinese Patent Application No. 202410136080.7, filed with the China National Intellectual Property Administration on January 30, 2024 and entitled "COMMUNICATION CONNECTION METHOD AND TERMINAL DEVICE", both of which are incorporated herein by reference in their entireties.

### TECHNICAL FIELD

This application relates to the field of mobile phone device communication, and in particular, to a communication connection method and a terminal device.

### BACKGROUND

A terminal device accesses the Internet mainly in two existing manners. One is using a mobile communication network for connection, for example, a 5^{th} generation (5^{th} generation, 5G) mobile communication technology, or a 4^{th} generation (4^{th} generation, 4G) mobile communication technology; and the other is using a wireless local area network (wireless local area network, WLAN) for network connection, for example, a wireless fidelity (wireless fidelity, Wi-Fi) network.

With development of the mobile Internet, a WLAN, especially Wi-Fi, has brought great convenience to work, study, and life of people, becoming an infrastructure as essential as water and electricity. However, due to a plurality of reasons such as weak signals and system resets, a Wi-Fi network often experiences frequent disconnection, resulting in poor user experience.

### SUMMARY

Embodiments of this application provide a communication connection method to address poor user experience caused by frequent Wi-Fi disconnection.

According to the communication connection method provided in embodiments of this application, when a Wi-Fi disconnection reason code is a self-healing-supporting reason code (or a Wi-Fi disconnection reason is a self-healing-supporting reason), a terminal device intercepts the disconnection reason code, so that the disconnection reason code is not transmitted to an upper-layer application of the terminal device. Thus, a Wi-Fi signal indicator continues to be displayed on an interface of the terminal device, and a user does not perceive Wi-Fi disconnection. In addition, the terminal device performs self-healing reconnection to an original Wi-Fi AP, to restore a Wi-Fi connection as soon as possible. Compared with a complete Wi-Fi connection process, the process of self-healing reconnection between the terminal device and the original Wi-Fi AP may not include some steps such as scanning and network selection, thereby accelerating Wi-Fi reconnection.

In addition to determining whether the Wi-Fi disconnection reason code is the self-healing-supporting reason code, the terminal device may further determine, with reference to another condition, whether to support self-healing reconnection to the original Wi-Fi AP. The another condition includes a Wi-Fi signal strength, whether a supplicant is in a completed state (if the supplicant is in the completed state, it indicates that the terminal device and the Wi-Fi AP are previously in a connected state), whether the original Wi-Fi AP is in a blacklist, or the like.

According to a first aspect, a communication connection method is provided and applied to a terminal device, and includes:
when there is a wireless fidelity Wi-Fi disconnection event, obtaining a disconnection reason code corresponding to the Wi-Fi disconnection event, where the disconnection reason code indicates a reason why the Wi-Fi connection drops, and the Wi-Fi disconnection event is that the Wi-Fi connection between a first radio access network device AP and the terminal device drops; and
reconnecting to the first AP based on the disconnection reason code.

In a possible implementation, the first AP may correspond to a Wi-Fi AP that the terminal device is originally connected to but is currently disconnected from. In this embodiment of this application, the first AP may also be described as an original Wi-Fi AP.

In a possible implementation, reconnection may also be described as self-healing reconnection, reconnection, self-healing connection, fast connection, or the like in the following embodiments of this application. Unlike a complete Wi-Fi connection procedure (for example, a procedure by following which the terminal device is connected to the AP for the first time), reconnection may not include some steps such as scanning and network selection. Therefore, Wi-Fi connection takes less time in reconnection.

With reference to the first aspect, in some implementations of the first aspect, reconnecting to the first AP based on the disconnection reason code specifically includes:
determining whether the disconnection reason code is the self-healing-supporting reason code, where the self-healing-supporting reason code supports reconnection between the terminal device and the first AP; and
reconnecting to the first AP if the disconnection reason code is the self-healing-supporting reason code.

According to the communication connection method provided in this implementation, after the terminal device is disconnected from the AP, whether the disconnection reason code satisfies the self-healing reconnection condition is determined. If the self-healing reconnection condition is satisfied, a mobile phone performs self-healing connection to the current AP. In this way, the mobile phone restores the Wi-Fi connection between the mobile phone and the AP, thereby reducing impact of Wi-Fi disconnection on network use experience of a user.

With reference to the first aspect, in some implementations of the first aspect, reconnecting to the first AP if the disconnection reason code is the self-healing-supporting reason code further includes:
if the disconnection reason code is the self-healing-supporting reason code, determining whether a received signal strength RSSI of the Wi-Fi is greater than a preset threshold; and
if the received signal strength RSSI of the Wi-Fi is greater than the preset threshold, reconnecting to the first AP.

With reference to the first aspect, in some implementations of the first aspect, the method further includes:
determining whether the first AP is in a blacklist; and
if the first AP is not in the blacklist, reconnecting to the first AP.

In a possible implementation, if the terminal device and the first AP enter the self-healing reconnection procedure, the terminal device adds the first AP to the blacklist. Thus, the terminal device cannot perform self-healing reconnection to the first AP again in a short period of time, saving communication connection resources.

With reference to the first aspect, in some implementations of the first aspect, the method further includes:
during reconnection to the first AP, adding, to the blacklist, a service set identifier SSID and a basic service set identifier BSSID that correspond to the first AP.

With reference to the first aspect, in some implementations of the first aspect, a quantity limit is set for the SSID in the blacklist, the quantity limit is a maximum quantity of first APs of the SSID that are added to the blacklist, and the method further includes:
determining whether the SSID corresponding to the first AP is in the blacklist;
if the SSID corresponding to the first AP is in the blacklist, determining whether the SSID in the blacklist reaches the quantity limit;
if the quantity limit is not reached, determining whether the BSSID corresponding to the first AP is in the blacklist; and
if the BSSID is not in the blacklist, reconnecting to the first AP.

With reference to the first aspect, in some implementations of the first aspect, the method further includes:
in a state of being connected to the first AP, failing in a process of roaming association with a second AP; and
receiving a disconnection indication message sent by the first AP, where the disconnection indication message indicates that the Wi-Fi connection between the first AP and the terminal device drops.

With reference to the first aspect, in some implementations of the first aspect, reconnecting to the first AP specifically includes:
sending a reconnection request message to the first AP; and
receiving a first response message that is sent by the first AP in response to the reconnection request message, where the first response message indicates to reconnect to the terminal device.

With reference to the first aspect, in some implementations of the first aspect, the disconnection indication message includes the disconnection reason code.

With reference to the first aspect, in some implementations of the first aspect, when there is the wireless fidelity Wi-Fi disconnection event, a Wi-Fi signal indicator continues to be displayed.

When it is learned that the current AP satisfies the self-healing reconnection conditions, or the mobile phone learns that the current disconnection reason code is the self-healing-supporting reason code, the mobile phone may intercept the Wi-Fi disconnection event, and does not transmit the Wi-Fi disconnection event to a UI side. Thus, the UI interface can always display the Wi-Fi signal indicator, reducing the user's perception of Wi-Fi disconnection and restoration within a short period of time, and improving use experience of the user.

According to a second aspect, a communication connection method is provided and applied to a terminal device, and includes:
in a state of being connected to a first AP, failing in a process of roaming association with a second AP;
receiving a disconnection indication message sent by the first AP, where the disconnection indication message indicates that a Wi-Fi connection between the first AP and the terminal device drops;
sending a reconnection request message to the first AP; and
receiving a first response message that is sent by the first AP in response to the reconnection request message, where the first response message indicates to reconnect to the terminal device.

With reference to the second aspect, in some implementations of the second aspect, sending the reconnection request message to the first AP specifically includes:
if the AP 1 satisfies a preset determining condition, sending the reconnection request message to the first AP, where the determining condition is used to determine whether to reconnect to the first AP.

With reference to the second aspect, in some implementations of the second aspect, that the first AP satisfies the preset determining condition includes:
the disconnection indication message sent by the first AP carries a disconnection reason code; and
the disconnection reason code is a self-healing-supporting reason code, where the self-healing-supporting reason code supports reconnection between the terminal device and the AP.

With reference to the second aspect, in some implementations of the second aspect, that the first AP satisfies the preset determining condition further includes:
the first RSSI is greater than a preset threshold.

With reference to the second aspect, in some implementations of the second aspect, that the first AP satisfies the preset determining condition further includes:
the first AP is not in a blacklist.

According to a third aspect, a terminal device is provided, including:
a processor; and
a memory, where
the memory stores a computer program, the computer program includes instructions, and when the instructions are executed by the processor, the terminal device is enabled to perform the method according to any one of the implementations of the first aspect or the second aspect.

According to a fourth aspect, a chip system is provided. The chip system includes a processing circuit, a receiving pin, and a sending pin, where the receiving pin, the sending pin, and the processing circuit communicate with each other through an internal connection path, and the processing circuit performs the method according to any one of the implementations of the first aspect or the second aspect, to control the receiving pin to receive a signal, and to control the sending pin to send a signal.

According to a fifth aspect, a computer-readable storage medium is provided. The computer-readable storage medium stores computer-executable program instructions, and when the computer-executable program instructions are run on a computer, the computer is enabled to perform the method according to any one of the implementations of the first aspect or the second aspect.

According to a sixth aspect, a computer program product is provided. The computer program product includes computer program code, and when the computer program code is run on a computer, the computer is enabled to perform the method according to any one of the implementations of the first aspect or the second aspect.

### BRIEF DESCRIPTION OF DRAWINGS

FIG. 1 is a diagram of a Wi-Fi roaming scenario according to an embodiment of this application;
FIG. 2 is a diagram of layer 2 roaming according to an embodiment of this application;
FIG. 3 is a diagram of a system architecture 10 to which a communication connection method is applicable according to an embodiment of this application;
FIG. 4 is a diagram of a structure of a terminal device 100 according to an embodiment of this application;
FIG. 5 is a block diagram of a software architecture of a terminal device 100 according to an embodiment of this application;
FIG. 6A and FIG. 6B are diagrams of GUIs that may be mentioned in some communication connection methods according to an embodiment of this application;
FIG. 7 is a schematic flowchart of a communication connection method according to an embodiment of this application;
FIG. 8 is a schematic flowchart of another communication connection method according to an embodiment of this application;
FIG. 9 is a diagram of a communication connection method applicable to a Wi-Fi roaming scenario according to an embodiment of this application;
FIG. 10 is a diagram of another communication connection method applicable to a Wi-Fi roaming scenario according to an embodiment of this application;
FIG. 11 is a schematic flowchart of still another communication connection method according to an embodiment of this application; and
FIG. 12 is a schematic flowchart of still another communication connection method according to an embodiment of this application.

### DESCRIPTION OF EMBODIMENTS

It should be noted that terms used in implementations of embodiments of this application are merely used for explaining specific embodiments of this application rather than limiting this application. In descriptions of embodiments of this application, "/" means "or" unless otherwise specified. For example, A/B may represent A or B. In this specification, "and/or" merely describes an association between associated objects, and indicates that three relationships may exist. For example, A and/or B may indicate the following three cases: Only A exists, both A and B exist, and only B exists. In addition, in the descriptions of embodiments of this application, unless otherwise specified, "a plurality of" means two or more, and "at least one" and "one or more" mean one, two, or more.

The terms "first" and "second" below are used merely for the purpose of description, and shall not be construed as indicating or implying relative importance or implying a quantity of indicated technical features. Therefore, a feature defined with "first" or "second" may explicitly or implicitly indicate that one or more such features are included.

Reference to "an embodiment", "some embodiments", or the like described in this specification means that a specific characteristic, structure, or feature described in combination with the embodiment is included in one or more embodiments of this application. Therefore, phrases such as "in an embodiment", "in some embodiments", "in some other embodiments", and "in some other embodiments" that occur in different places of this specification do not mean that reference is certainly made to the same embodiment, but mean "one or more but not all of embodiments", unless otherwise specifically emphasized in another manner. The terms "include", "comprise", "have", and variants thereof all mean "include but are not limited to", unless otherwise specifically emphasized in another manner.

For a better understanding of a communication connection method provided in embodiments of this application, concepts or terms that may be used in the following embodiments are first described below.

### 1. Wi-Fi roaming

Wi-Fi roaming is a behavior that a terminal device (station, STA) moves between coverage areas of different radio access points (access point, AP) that belong to a same extended service set (extended service set, ESS), with a user service remaining uninterrupted. The same ESS includes a plurality of APs. When the terminal device moves from a coverage area of one AP to a coverage area of another AP, a Wi-Fi roaming technology may be used to implement a smooth transition for the service used by the terminal device. For example, in some places such as an office, a conference hall, and a library, a coverage area of a single AP is limited. A plurality of APs are usually selected to implement Wi-Fi network coverage from a plurality of angles, so as to ensure an uninterrupted service for a user during movement.

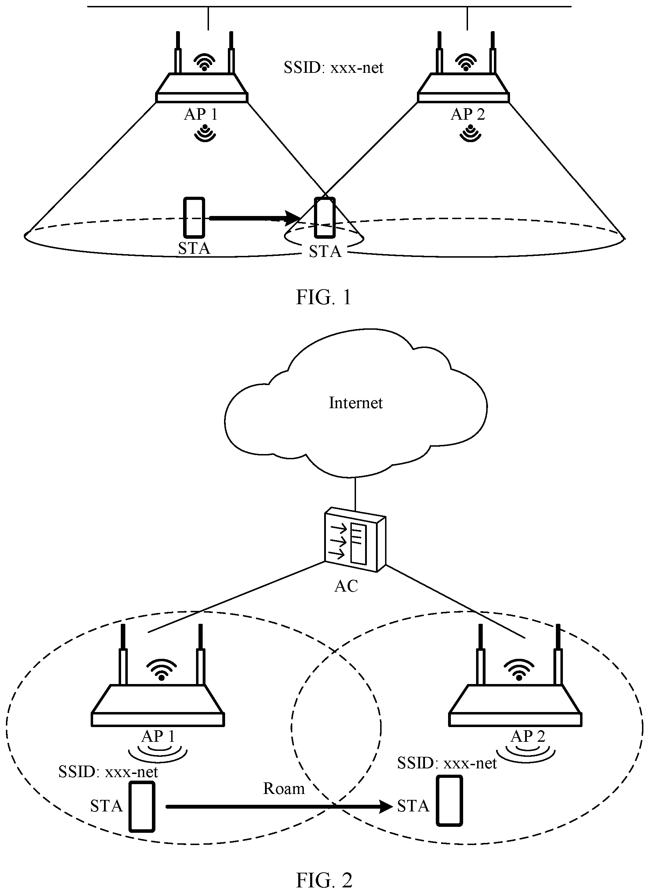

Radio signals of one AP can cover only a limited area. Without Wi-Fi roaming, when a user moves to an area with weak AP signals in a WLAN, a network between a terminal device (or referred to as an STA) of the user and the AP is disconnected. For audio, video, and other services, network disconnection seriously affects use experience of the user. Emergence of Wi-Fi roaming is precisely intended to resolve this problem. FIG. 1 is a diagram of a Wi-Fi roaming scenario according to an embodiment of this application. The Wi-Fi roaming scenario may include a plurality of APs that can provide a same access network service. An AP 1 and an AP 2 are used as examples. The AP 1 and the AP 2 provide the same access network service. For example, service set identifiers (service set identifier, SSID) of the AP 1 and the AP 2 are both xxx-net. An STA may be initially located in a Wi-Fi network coverage area of the AP 1. When the STA moves to critical areas of Wi-Fi network coverage areas of the two APs, the STA associates with the new AP 2 and disassociates from the original AP 1, with a Wi-Fi network connection remaining uninterrupted in the process. Simply put, this is similar to a mobile calling function of a mobile phone. When the mobile phone moves from a coverage area of one base station to a coverage area of another base station, roaming can provide an uninterrupted and seamless calling capability.

A greatest advantage of the WLAN network is that the STA is not affected by a physical medium, and the STA may move around within a coverage area of the WLAN, with a service remaining uninterrupted. Wi-Fi roaming improves, by resolving the following issues, the user's experience of using the wireless network: (1) ensuring that an Internet protocol (Internet protocol, IP) address of the user remains unchanged, a network that is associated with after initial connection to the WLAN can still be accessed after roaming, and a service that can be executed remains unchanged; and (2) preventing data packet loss or even service interruption caused by an excessively long time of user authentication during roaming.

For a working principle of Wi-Fi roaming, a specific Wi-Fi roaming process usually includes the following phases: (1) Triggering: When detecting that a downlink signal is less than a threshold, an STA triggers a channel scanning process. (2) Scanning: The STA discovers available APs in a current location in an active scanning manner or a passive scanning manner, and measures network information to be used for determining network selection. Active scanning mainly includes the following: The STA periodically sends an active scanning frame (probe request), an AP replies (probe response) after detecting the scanning frame through listening, and the STA senses presence of the AP after receiving a reply message. Passive scanning mainly includes the following: The STA senses presence of an AP by listening to a beacon frame periodically sent by the AP. Which scanning manner is used is usually determined by what the STA supports. Wireless network interface cards of mobile phones or computers generally support both scanning manners, and voice over Internet protocol (voice over Internet protocol, VoIP) voice terminals generally use the passive scanning manner. (3) Network selection: An AP is selected as a roaming target based on information about the APs obtained through scanning. (4) Handover: A roaming manner matching a network side is selected based on the STA and a network capability.

As shown in FIG. 2, roaming may be divided into layer 2 roaming and layer 3 roaming based on whether an STA is in a same subnet. FIG. 2 is only a diagram of layer 2 roaming. Layer 2 roaming is that the STA is still in an original subnet after roaming, and layer 3 roaming is that the STA roams between different subnets (roaming within a same virtual local area network pool (virtual local area network pool, VLAN pool) is still layer 2 roaming). During networking planning for a WLAN network, APs on a same floor may be deployed for layer 2 roaming, and APs on different floors may be deployed for layer 3 roaming. FIG. 2 shows a scenario in which the STA roams between different APs under a same radio controller (Access Controller, AC). The AC herein is a network device responsible for managing APs (which may be, for example, Wi-Fi APs) in a wireless network in an area.

### 2. Class 2 class frame

An STA can successfully send a class 2 class frame only after being successfully authenticated. If the STA or an AP receives a class 2 class frame without having been successfully authenticated, the STA or the AP replies with a frame to push a peer end back to a nonauthenticated and nonassociated state.

### 3. Class 3 class frame

If an STA and an AP complete authentication and association, and enter an authenticated, associated, and 802.1x unauthenticated state, data service transmission may be performed between the STA and the AP. Class 3 class frames include all frames except class 1 and class 2 frames.

With reference to the introduction in the background, frequent Wi-Fi disconnection leads to poor Internet access experience of a user. Especially in a scenario in which the user has a high requirement on network quality, such as gaming, conferencing, or live streaming, Wi-Fi disconnection greatly affects operation of a normal service.

In view of this, an embodiment of this application provides a communication connection method. During Wi-Fi disconnection, whether self-healing reconnection conditions are satisfied is determined based on a Wi-Fi disconnection reason, a network status, an AP status, and the like. If the self-healing reconnection conditions are satisfied, self-healing reconnection to a Wi-Fi network is performed, thus reducing impact of frequent Wi-Fi disconnection on a normal network service.

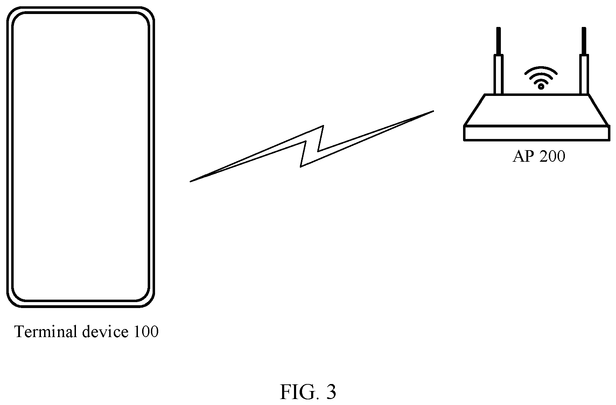

For example, FIG. 3 is a diagram of a system architecture 10 to which a communication connection method is applicable according to an embodiment of this application. The system architecture 10 may include at least one terminal device 100 and a radio access point (access point, AP) 200.

In some embodiments, the terminal device 100 may be a plurality of types of electronic devices, for example, a smartphone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or a dedicated voice call device. A specific type of the terminal device 100 is not limited in this embodiment of this application.

In some embodiments, the AP 200 may be, for example, an AP (or referred to as a hotspot). A network connection may be implemented between the terminal device 100 and the AP 200 through Wi-Fi. The terminal device 100 may access the Internet through the AP 200.

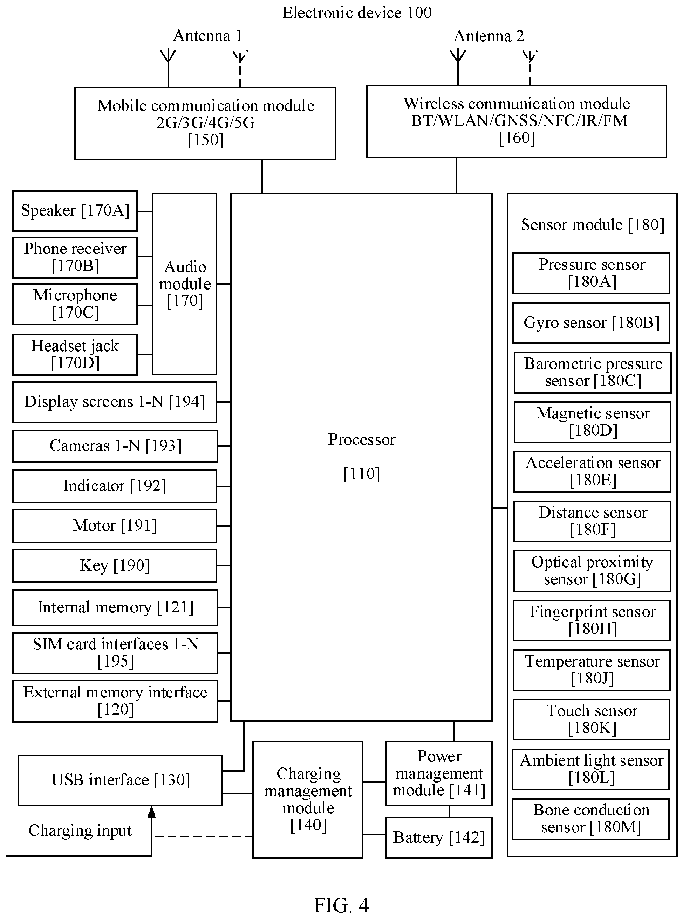

For example, FIG. 4 is a diagram of a structure of a terminal device 100 according to an embodiment of this application.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in this embodiment of this application does not constitute a specific limitation on the terminal device 100. In some other embodiments of this application, the terminal device 100 may include more or fewer components than those shown in the figure, or combine some components, or split some components, or have a different component arrangement. The components shown in the figure may be implemented by using hardware, software, or a combination of software and hardware.

A wireless communication function of the terminal device 100 may be implemented by using the antenna 1, the antenna 2, the mobile communication module 150, the wireless communication module 160, a modem processor, a baseband processor, and the like.

The antenna 1 and the antenna 2 are configured to transmit and receive electromagnetic wave signals. Each antenna in the terminal device 100 may be configured to cover one or more communication frequency bands. Different antennas may further be reused to improve antenna utilization. For example, the antenna 1 may be reused as a diversity antenna of a wireless local area network. In some other embodiments, the antennas may be used in combination with a tuning switch.

The mobile communication module 150 may provide a wireless communication solution that is applied to the terminal device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal obtained through modulation performed by the modem processor, and convert the signal into an electromagnetic wave through the antenna 1, for radiation. In some embodiments, at least some of the functional modules of the mobile communication module 150 may be disposed in the processor 110. In some embodiments, at least some of the functional modules of the mobile communication module 150 may be disposed in a same device as at least some of modules of the processor 110.

The modem processor may include a modulator and a demodulator. The modulator is configured to modulate a to-be-sent low-frequency baseband signal to a medium-high-frequency signal. The demodulator is configured to demodulate a received electromagnetic wave signal to a low-frequency baseband signal. Then, the demodulator transmits, to the baseband processor for processing, the low-frequency baseband signal obtained through demodulation. The low-frequency baseband signal is processed by the baseband processor and then transmitted to an application processor. The application processor outputs a sound signal through an audio device (which is not limited to the speaker 170A and the phone receiver 170B), or displays an image or a video by using the display screen 194. In some embodiments, the modem processor may be an independent component. In some other embodiments, the modem processor may be independent of the processor 110, and be disposed in a same device as the mobile communication module 150 or another functional module.

The wireless communication module 160 may provide wireless communication solutions that are applied to the terminal device 100 and that include a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices into which at least one communication processing module is integrated. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or another technology. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based augmentation system (satellite based augmentation systems, SBAS).

The terminal device 100 implements a display function by using a GPU, the display screen 194, the application processor, and the like. The display screen 194 is configured to display an image, a video, and the like.

The terminal device 100 may implement a shooting function by using an ISP, the camera 193, a video codec, the GPU, the display screen 194, the application processor, and the like.

A digital signal processor is configured to process a digital signal. In addition to a digital image signal, the digital signal processor may further process other digital signals. For example, when the terminal device 100 performs frequency selection, the digital signal processor is configured to perform Fourier transform on frequency energy, and the like. The video codec is configured to: compress or decompress a digital video. An NPU is a neural-network (neural-network, NN) computing processing unit, which rapidly processes input information by referring to a structure of a biological neural network, such as a mode of transmission between neurons in a human brain, and may further perform self-learning continuously.

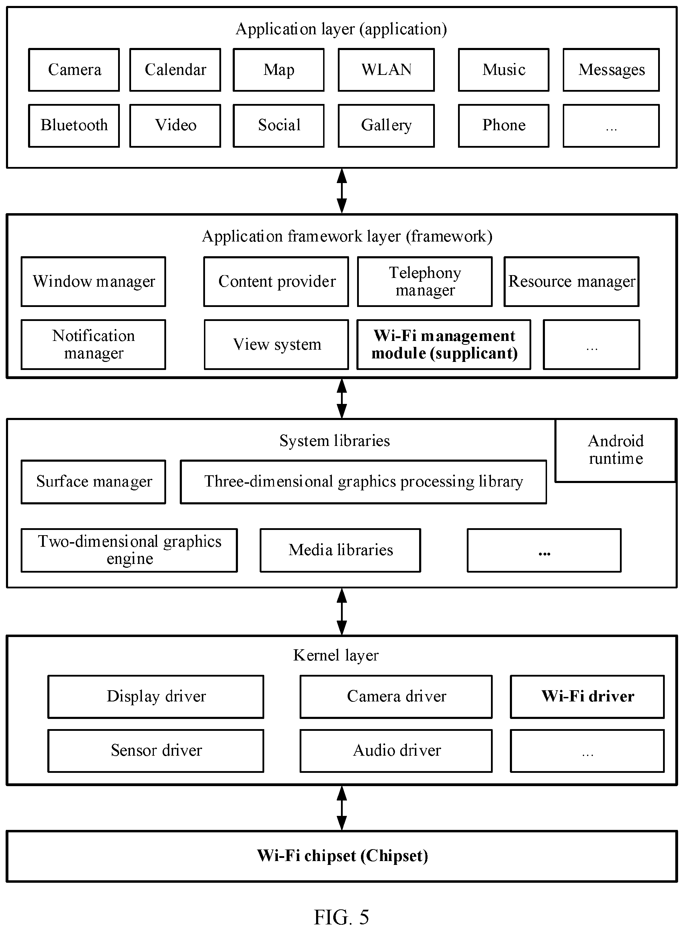

For example, a software system of the terminal device 100 may employ a layered architecture, an event-driven architecture, a microkernel architecture, a microservice architecture, or a cloud architecture. In this embodiment of this application, an Android system with the layered architecture is used as an example to illustrate a software architecture of the terminal device 100. FIG. 5 is a diagram of a system architecture of a terminal device 100 applicable to a solution of this application according to an embodiment of this application. The system architecture may include several layers into which software of the Android system is divided based on roles and work division. These layers communicate with each other through software interfaces. In some embodiments, the Android system may be divided into four layers, which are an application layer, an application framework layer, an Android runtime (Android runtime), system libraries, a kernel layer, a hardware abstraction layer (hardware abstraction layer, HAL), and a hardware layer from top to bottom. In addition, the system architecture may further include a Wi-Fi chipset (chepset). The Wi-Fi chipset may be located at the hardware layer of the terminal device 100.

The application layer may include a series of application packages. As shown in FIG. 5, the application packages may include camera, calendar, map, WLAN, music, messages, Bluetooth, video, social, gallery, phone, and other applications.

The application framework (framework) layer provides an application programming interface (application programming interface, API) and a programming framework for the applications at the application layer. The application framework layer includes some predefined functions. As shown in FIG. 5, the application framework layer may include a window manager, a content provider, a telephony manager, a resource manager, a notification manager, a view system, a Wi-Fi management module (supplicant), and the like.

The window manager is configured to manage a window application. The window manager may obtain a size of a display screen, determine whether there is a status bar, lock the screen, capture a screenshot, and the like.

The content provider is configured to: store and obtain data, and enable the data to be accessed by the applications. The data may include a video, an image, audio, calls that are made and answered, a browsing history, a bookmark, contacts, and the like.

The view system includes visual controls, for example, a control for displaying text and a control for displaying an image. The view system may be configured to create an application. A display interface may include one or more views. For example, a display interface including a short message notification icon may include a view for displaying text and a view for displaying an image.

The telephony manager is configured to provide a communication function of the terminal device 100, for example, management of call statuses (including connected, ended, and the like).

The resource manager provides various resources, such as a localized character string, an icon, an image, a layout file, and a video file, for the applications.

The notification manager enables an application to display notification information on the status bar. The notification information may be used for conveying an informative message, which may disappear automatically after a short period of time, with no need for user interaction. For example, the notification manager is used to inform completion of downloading, provide a message reminder, and the like. Alternatively, the notification manager may be a notification that appears on a top status bar of a system in a form of a graph or scrolling text, such as a notification from an application running at a background, or may be a notification that appears on a screen in a form of a dialog window. For example, text information is displayed on the status bar, an alert sound is played, the terminal vibrates, or an indicator blinks.

The Wi-Fi management module may also be described as middleware, and is configured to transfer all messages between a kernel mode and a user mode during running of the terminal device. The Wi-Fi management module may be the supplicant.

The Android runtime includes core libraries and a virtual machine. The Android runtime is responsible for scheduling and management of the Android system.

The core libraries include two parts. One part is functions that need to be invoked by the Java language, and the other part is core libraries of Android.

The application layer and the application framework layer run in the virtual machine. The virtual machine executes Java files of the application layer and the application framework layer as binary files. The virtual machine is configured to perform functions such as object lifecycle management, stack management, thread management, security and exception management, and garbage collection.

The system libraries may include a plurality of functional modules, for example, a surface manager (surface manager), media libraries (Media Libraries), a three-dimensional graphics processing library (for example, OpenGL ES), and a 2D graphics engine (for example, SGL).

The surface manager is configured to: manage a display subsystem, and composite 2D and 3D graphic layers from a plurality of applications.

The media libraries support playback and recording of a plurality of common audio and video formats, static image files, and the like. The media libraries may support a plurality of audio and video encoding formats, such as MPEG4, H.264, MP3, AAC, AMR, JPG, and PNG.

The three-dimensional graphics processing library is configured to implement three-dimensional graphics drawing, image rendering, synthesis, graphic layer processing, and the like.

The 2D graphics engine is a drawing engine for 2D drawing.

The kernel layer is a layer between hardware and software. The kernel layer includes at least a display driver, a camera sensor driver, an audio driver, a sensor driver, and a Wi-Fi driver. The Wi-Fi driver is responsible for interconnecting the Wi-Fi chipset and an operating system of the terminal device.

The Wi-Fi chipset is located at the hardware layer of the terminal device.

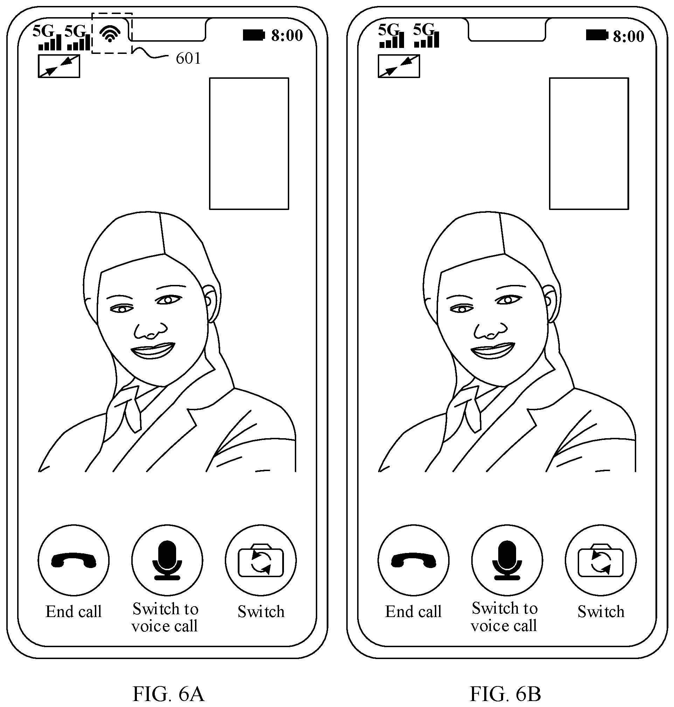

For example, FIG. 6A is a diagram of a scenario to which a communication connection method is applicable according to an embodiment of this application. An example in which the terminal device 100 is a mobile phone and the AP 200 is an AP is used herein for description.

In a possible application scenario, when a user has a high requirement on use of a Wi-Fi network (for example, in a gaming scenario, a network conferencing scenario, or a video call scenario), if Wi-Fi disconnection occurs between the mobile phone and the AP due to some problems, operation of a normal service of the user is seriously affected. In this case, a Wi-Fi signal indicator on an interface of the mobile phone also disappears, and the interface of the mobile phone changes, for example, from what is shown in FIG. 6A to what is shown in FIG. 6B. From a change that the Wi-Fi signal indicator (for example, 601 in FIG. 6A) disappears, the user can clearly learn that the Wi-Fi network is disconnected.

During actual application, many factors affect a Wi-Fi connection status. Among these factors, there are some disconnection reasons that have impact on a normal Wi-Fi connection only within an extremely short period of time. Therefore, in the solution of this embodiment of this application, the mobile phone may perform self-healing Wi-Fi reconnection in a case of the foregoing disconnection reasons, thereby quickly restoring a network connection between the mobile phone and the AP.

In some embodiments, after the Wi-Fi connection between the mobile phone and the AP is restored, the Wi-Fi signal indicator may be displayed again on the interface of the mobile phone, to prompt the user that the Wi-Fi network is reconnected. However, if Wi-Fi disconnection occurs frequently, and self-healing reconnection is performed each time disconnection occurs, the Wi-Fi signal indicator on the interface of the mobile phone frequently disappears and reappears. In a scenario in which the user has a high requirement on use of the Wi-Fi network, this may indicate a Wi-Fi connection status to the user. However, in a scenario in which the user does not have a high requirement on use of the Wi-Fi network, for example, when the user watches a video by using the Wi-Fi network (a video app usually buffers a segment of to-be-played content in advance), frequent disappearance and reappearance of the Wi-Fi signal indicator within a short period of time do not provide much meaningful information to the user, but only affect watching experience of the user. Especially, if the Wi-Fi network restores to a normally connected state after frequent disconnection and self-healing within the short period of time, Wi-Fi connection problems within the short period of time do not have real impact on the user. In this case, if the Wi-Fi signal indicator still appears or disappears based on an actual Wi-Fi connection status, this only causes confusion for the user.

In consideration of the foregoing problem, in some embodiments provided in this application, if a reason affecting a normal Wi-Fi connection is a reason that can support self-healing, the mobile phone may continue to display the Wi-Fi signal indicator on the interface of the mobile phone in a case of Wi-Fi disconnection, so that the user does not perceive the Wi-Fi connection status. Herein, the reason that can support self-healing means that the reason causes Wi-Fi disconnection only within a short period of time, and subsequently the Wi-Fi connection between the mobile phone and the AP may be restored by a self-healing connection operation.

It can be understood that because Wi-Fi disconnection caused by the reason that can support self-healing (referred to as a self-healing-supporting reason for short below) has a little impact on the user, or is not noticeably perceived by the user as network disconnection, the mobile phone may enter a self-healing reconnection procedure when the mobile phone learns that a Wi-Fi disconnection reason is the self-healing-supporting reason. In this way, the Wi-Fi network quickly recovers, preventing the user from experiencing frequent Wi-Fi network disconnection. In addition, when the disconnection reason is the self-healing-supporting reason, a Wi-Fi management module (referred to as a supplicant below) in the mobile phone intercepts the self-healing-supporting reason, and does not report the reason to an upper-layer application, so that the upper-layer application is unaware of existence of the reason for Wi-Fi disconnection, and the user interface (user interface, UI) continues to display the Wi-Fi signal indicator. Thus, the user does not perceive a Wi-Fi disconnection and self-healing reconnection process, improving the user's experience of using the Wi-Fi network.

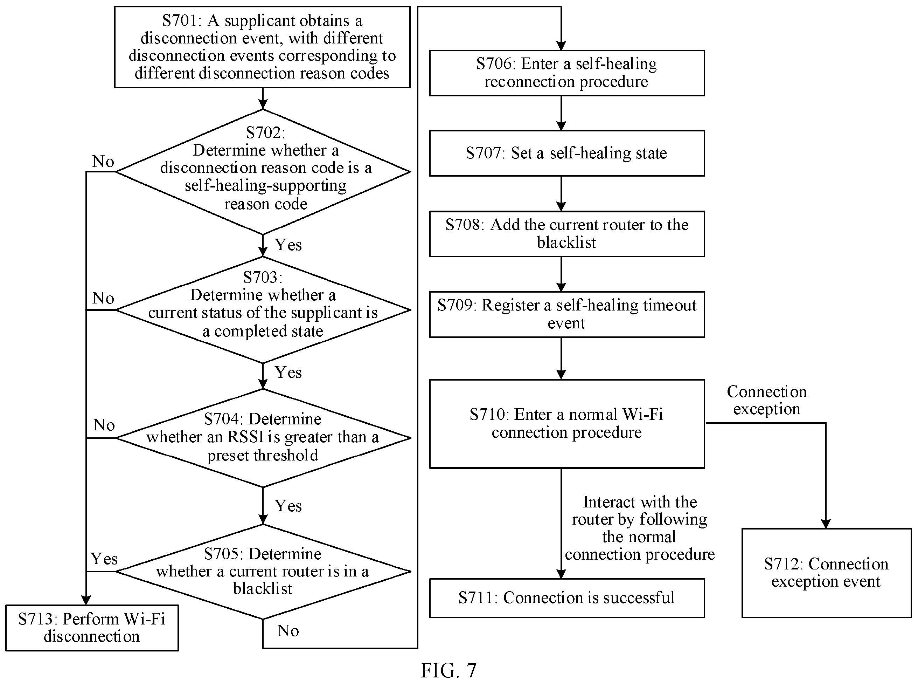

For a better understanding of the solution provided in this embodiment of this application, an implementation procedure of the communication connection method provided in this embodiment of this application is described below with reference to accompanying drawings. For ease of description, an example in which the terminal device is a mobile phone is still used for description below. For example, FIG. 7 is a schematic flowchart of a communication connection method according to an embodiment of this application. Specifically, the following steps may be included.

S701: A supplicant obtains a disconnection event, with different disconnection events corresponding to different disconnection reason codes.

The supplicant may be an event-driven framework, and may correspond to the foregoing Wi-Fi management module.

In some embodiments, disconnection events may be caused by a plurality of reasons, which may be reasons on a mobile phone side or reasons on an AP side. For example, the reasons include the following: (1) Disassociation occurs due to inactivity of the mobile phone side or the AP side (disassociated due to inactivity). For example, the AP sends a data frame or a keepalive frame to the mobile phone, but does not receive, over a long period of time, an ACK frame fed back by the mobile phone (whether disassociation occurs may be determined based on whether the ACK frame fed back by the mobile phone exists on an air interface); or information from the mobile phone cannot be received due to a problem of a communication environment or a problem of a communication receiving module Rx on the AP side; or information from the AP cannot be received due to a problem of a communication receiving module Rx on the mobile phone side; or beacon frame loss is detected on the mobile phone side. (2) The mobile phone or the AP receives a class 2 class frame from a nonauthenticated peer end (the AP or the mobile phone) (class 2 frame received from nonauthenticated STA). For example, the AP receives request information from the mobile phone, but the mobile phone fails an authentication phase; or the AP receives request information from the mobile phone, but the AP side does not have any information about the mobile phone; or the AP receives request information from the mobile phone, but the mobile phone does not go through an authentication phase; or the mobile phone triggers roaming connection to another AP (denoted as an AP 2), but an association process fails due to a specific reason, and in this case, the original AP (denoted as an AP 1) already deletes a media access control (media access control address, MAC) address of the mobile phone, and the mobile phone does not perform self-healing reconnection to the AP 1 or the mobile phone sends a disassociation (diassoc) message to the AP; or transmit power of the mobile phone drops to zero, and the AP initiates a forced transition management (Bss transition management, BTM) packet, and in this case, the mobile phone cannot roam successfully, and a case similar to the following is triggered: the AP receives a request message from the mobile phone, but finds that the mobile phone fails an authentication phase. (3) The mobile phone or the AP receives a class 3 class frame from a nonauthenticated peer end (the AP or the mobile phone) (class 3 frame received from nonassociated). (4) A device of a basic service set (basic service set, BSS) leaves the BSS. (5) A peer end repeatedly sends an STA kickout (STA kickout) message.

In some embodiments, different disconnection events may correspond to different disconnection reason codes. Because different disconnection events have different impact on whether self-healing reconnection can be performed between the mobile phone and the AP (that is, in some disconnection events, self-healing reconnection can be performed between the mobile phone and the AP, whereas in some other disconnection events, self-healing reconnection cannot be performed between the mobile phone and the AP), correspondences between different disconnection reason codes and whether self-healing reconnection can be performed may be preset. For example, the following Table 1 shows an example of correspondences between reason codes and disconnection events in a case that self-healing reconnection can be performed, according to an embodiment of this application.

**Table 1**

| Reason code (reason code) | Disconnection event/Disconnection scenario |
|---|---|
| 4 | Disassociation occurs due to inactivity. |
| 6 | A class 2 class frame is received from a nonauthenticated STA. |
| 7 | A class 3 class frame is received from a nonauthenticated STA. |
| 8 | A device of a BSS leaves the BSS. |
| 65529 | A peer end repeatedly sends an STA KICKOUT, but fails. |
| 65533 | A beacon frame is lost. |

It should be noted that only the reason codes 4, 6, 7, 8, 65529, and 65533 are used as examples for description in the foregoing Table 1. However, during actual application, reason codes that support self-healing reconnection are not limited thereto. In this embodiment of this application, the reason codes that support self-healing reconnection may be described as self-healing-supporting reason codes. The self-healing-supporting reason codes may be reason codes that can support self-healing reconnection and that are specified in a standard or a protocol (for example, the reason code 4, the reason code 6, the reason code 7, and the reason code 8), or may be user-defined reason codes (for example, the reason code 65529 and the reason code 65533).

S702: Determine whether a disconnection reason code is a self-healing-supporting reason code.

If the disconnection reason code is the self-healing-supporting reason code, that is, a determining result of this step is "yes", step S703 may be performed next. If the disconnection reason code is not the self-healing-supporting reason code, that is, a determining result of this step is "no", step S713, that is, Wi-Fi disconnection, may be performed next.

In some embodiments, the self-healing-supporting reason codes may be preset and locally stored in the mobile phone. After obtaining the disconnection event, the mobile phone may obtain the reason code according to a preset correspondence between the disconnection event and the disconnection reason code. Then, the supplicant in the mobile phone obtains the reason code, and determines whether the reason code is the self-healing-supporting reason code.

Specifically, a Wi-Fi chipset of the mobile phone may determine, based on a current Wi-Fi communication status, whether there is a disconnection event. For example, when the Wi-Fi chipset cannot receive a data frame from the AP side, the Wi-Fi chipset may learn that there is a disconnection event; or when the Wi-Fi chipset receives an unauthenticated message sent by the AP, the Wi-Fi chipset may determine that there is a disconnection event. Then, the Wi-Fi chipset may send a disconnection request message to a Wi-Fi driver. The disconnection request message may include the disconnection event (which may be, for example, a disconnection event indicated by a combination of capability bits). After obtaining the disconnection event, the Wi-Fi driver may obtain the disconnection reason code corresponding to the disconnection event, and send the disconnection reason code to the supplicant. Alternatively, after obtaining the disconnection event, the Wi-Fi driver may directly send the disconnection event to the supplicant, for example, transparently transmit the disconnection request message to the supplicant. After that, the supplicant may determine whether the obtained reason code is the self-healing-supporting reason code; or the supplicant may obtain the disconnection reason code based on the disconnection event, and then determine whether the disconnection reason code is the self-healing-supporting reason code.

S703: Determine whether a current status of the supplicant is a completed (COMPLETED) state.

It should be noted that the supplicant is the event-driven framework, and the supplicant sets a connection event to different states in different interaction phases of the connection event. State descriptions include: 1. DISCONNECTED; 2. ASSOCIATING; 3. ASSOCIATED; 4. 4WAY_HANDSHAKE; 5. GROUP_HANDSHAKE; and 6. COMPLETED. The COMPLETED state indicates a Wi-Fi connected state (in this embodiment of this application, COMPLETED may indicate that the mobile phone and the Wi-Fi AP are originally in the connected state). During determining of self-healing reconnection, it needs to be first ensured that the connection event is from the original connected state to the associating state (that is, from COMPLETE to ASSOCIATING).

If the current status of the supplicant is the completed state, that is, a determining result of this step is "yes", step S704 may be performed next. If the current status of the supplicant is not the completed state, that is, a determining result of this step is "no", step S713, that is, Wi-Fi disconnection, may be performed next.

S704: Determine whether a received signal strength indicator (received signal strength indication, RSSI) is greater than a preset threshold.

If the RSSI is greater than the preset threshold, that is, a determining result of this step is "yes", step S705 may be performed next. If the RSSI is less than or equal to the preset threshold, that is, a determining result of this step is "no", step S713, that is, Wi-Fi disconnection, may be performed next.

S705: Determine whether the current AP is in a blacklist.

It should be noted that a purpose of the determining operations in step S702 to step S705 is to determine whether a current situation (including the disconnection reason, the signal strength, the AP status, and the like) satisfies conditions for performing self-healing reconnection between the mobile phone and the AP. Usually, if the mobile phone and the AP satisfy these determining conditions, the mobile phone initiates self-healing reconnection to the AP. After the self-healing reconnection operation is performed between the mobile phone and the AP, the AP to which the mobile phone currently performs self-healing reconnection is added to the blacklist no matter whether a self-healing reconnection result of the self-healing reconnection operation is success or failure, so as to prevent the mobile phone from frequently initiating self-healing reconnection to the same AP within a short period of time.

In some embodiments, a first timeout interval, such as 2 min, may be set for the AP in the blacklist. When time during which the AP is in the blacklist reaches the first timeout interval, the AP may be released from the blacklist.

Specifically, if the mobile phone and the AP satisfy the self-healing reconnection determining conditions and enter the self-healing reconnection procedure, an SSID and a basic service set identifier (basic service identifier, BSSID) that correspond to the AP may both be added to the blacklist. In some cases, one SSID may include APs with different BSSIDs. For example, an SSID 1 may include four APs whose basic service set identifiers are a BSSID 1, a BSSID 2, a BSSID 3, and a BSSID 4. During setting of the blacklist, corresponding quantity limits in the blacklist may be set for different SSIDs. For example, for the service set identifier SSID 1, a quantity limit in the blacklist corresponding to the SSID 1 may be set to 3. This means that a maximum of three APs of the SSID may be added to the blacklist, and the three APs have different BSSIDs. If a quantity of APs of the SSID that are in the blacklist has reached the quantity limit, and an AP of the SSID needs to be added to the blacklist, self-healing reconnection is performed on none of the APs of the SSID subsequently (no matter whether the BSSIDs of the APs are already in the blacklist).

For example, if two APs whose service identifiers are the SSID 1 have been added to the blacklist, and basic service set identifiers of the two APs of the SSID 1 are the BSSID 1 and the BSSID 2, when the mobile phone and the AP whose service identifier is the SSID 1 and basic service set identifier is the BSSID 3 enter a self-healing reconnection procedure, the mobile phone (for example, the supplicant) first queries whether the SSID 1 is in the blacklist. If the SSID 1 is in the blacklist, the mobile phone further queries whether there is the BSSID 3 under the SSID 1 in the blacklist. If the mobile phone learns that there is no SSID 3 under the SSID 1 in the blacklist, and the quantity of APs of the SSID 1 that have been added to the blacklist has not reached the quantity limit yet, the mobile phone may add the BSSID 3 to the blacklist. In this case, the quantity of APs that correspond to the SSID 1 and that are in the blacklist reaches the quantity limit 3. When the mobile phone and the AP whose service identifier is the SSID 1 and basic service set identifier is the BSSID 4 subsequently enter self-healing reconnection, the mobile phone does not perform self-healing reconnection to the AP with the BSSID 4 under the SSID 1 subsequently, because the SSID 1 already exists in the blacklist and the quantity of APs of the SSID 1 has reached the quantity limit.

For example, AP information added to the blacklist may be, for example:

```
         {SSID 1
         BSSID 1, BSSID 2, BSSID 3, [num3]}
```

[num3] may indicate that the quantity limit for the SSID 1 is 3, that is, a maximum of three APs whose SSIDs are the SSID 1 are added to the blacklist.

In some embodiments, when a quantity of APs of an SSID that are in the blacklist reaches a quantity limit, the result may be reported to the supplicant in the mobile phone. Based on the result, the supplicant may determine not to perform self-healing reconnection to APs of the SSID. Specifically, the supplicant may determine not to perform self-healing reconnection to the APs of the SSID in a period in which the quantity of APs of the SSID that are in the blacklist is always the quantity limit.

In some embodiments, when the first timeout interval has elapsed for an AP corresponding to a BSSID under the SSID that has reached the quantity limit in the blacklist, and the AP is released from the blacklist, the result may also be reported to the supplicant in the mobile phone. Based on the result, the supplicant may determine that the quantity of APs of the SSID that are in the blacklist is less than the quantity limit. Subsequently, when the supplicant determines whether to perform self-healing reconnection to another AP of the SSID, the supplicant may determine, by first querying the SSID and then querying a BSSID under the SSID, whether the AP has been added to the blacklist. If the quantity of APs of the SSID that are in the blacklist is less than the quantity limit, and the BSSID of the AP to which self-healing reconnection is to be performed currently is not in the blacklist, the supplicant may determine to perform self-healing reconnection to the AP. In addition, after entering a self-healing reconnection procedure, the supplicant adds, to the blacklist, the SSID and the BSSID that correspond to the AP.

In some embodiments, when the supplicant learns that the current AP satisfies the self-healing reconnection conditions (for example, after step S702 to step S705 are performed), the supplicant may intercept the obtained disconnection event, and does not report the disconnection event to a UI side of the mobile phone. Thus, the UI interface may always display a Wi-Fi signal indicator, preventing a user from perceiving a short time of Wi-Fi disconnection. Alternatively, when the supplicant learns that the current disconnection reason code is the self-healing-supporting reason code, the supplicant may intercept the obtained disconnection reason code, and does not report the disconnection reason code to a UI side of the mobile phone. Thus, the UI interface may always display a Wi-Fi signal indicator, preventing a user from perceiving a short time of Wi-Fi disconnection.

It should be noted that an execution sequence of the determining conditions in step S702 to step S705 may not be limited to the sequence in the embodiment in FIG. 7. The execution sequence of the determining conditions is not limited in this embodiment of this application.

In this step, if the current AP is not in the blacklist (including a case that the SSID of the current AP is not in the blacklist, or a case that the SSID of the current AP is in the blacklist but the BSSID of the current AP is not in the blacklist, and the SSID does not reach a quantity limit), that is, a determining result of this step is "no", step S706 may be performed next. If the current AP is in the blacklist (including a case that the SSID of the current AP is in the blacklist and the BSSID of the current AP is also in the blacklist, or a case that the SSID of the current AP is in the blacklist and the BSSID of the current AP is not in the blacklist, but the SSID has reached a quantity limit), that is, a determining result of this step is "yes", step S713, that is, Wi-Fi disconnection, may be performed next.

S706: Enter the self-healing reconnection procedure.

When the self-healing reconnection determining conditions are satisfied, that is, the following several conditions are satisfied: (1) the disconnection reason code is the self-healing-supporting reason code, (2) the RSSI of the mobile phone is greater than the preset threshold, (3) the supplicant is in the completed state, and (4) the current router is not in the blacklist, the mobile phone may enter the self-healing reconnection procedure, to initiate the procedure of reconnecting to the AP.

It should be noted that, in this embodiment of this application, the several ones shown above are merely used as examples of self-healing reconnection determining conditions for description. During actual application, the determining conditions may alternatively be some conditions rather than all of the several determining conditions. This is not limited in this embodiment of this application.

S707: Set a self-healing state.

In some embodiments, setting the self-healing state may be setting indication information corresponding to the self-healing procedure, to identify a current procedure as the self-healing reconnection procedure. A purpose of setting the self-healing state is to distinguish the current self-healing reconnection procedure from a regular Wi-Fi connection procedure (not self-healing reconnection), so that the mobile phone performs the procedure by following a self-healing reconnection path.

It should be noted that a purpose of setting the self-healing state is to facilitate subsequent determining of maintainability and logic of the self-healing reconnection solution, and to visualize government benefits of the self-healing reconnection solution.

S708: Add the current AP to the blacklist.

In some embodiments, after the mobile phone enters the procedure of self-healing reconnection to the current AP, the SSID and the BSSID that correspond to the current AP may be added to the blacklist.

S709: Register a self-healing timeout event.

In some embodiments, the mobile phone may preset a second timeout interval corresponding to the self-healing reconnection procedure, for example, 10 min. If the mobile phone still does not perform self-healing Wi-Fi reconnection successfully after the second timeout interval elapses, it indicates that the self-healing timeout event has occurred.

It should be noted that registering the self-healing timeout event can prevent an excessively long time of self-healing reconnection between the mobile phone and the AP, which results in an excessively long time of Wi-Fi network recovery and affects use experience of the user.

S710: Enter a fast Wi-Fi connection procedure.

The fast Wi-Fi connection procedure herein is the procedure of self-healing reconnection between the mobile phone and the AP.

It should be noted that fast Wi-Fi performed between the mobile phone and the AP is self-healing connection or self-healing reconnection in this embodiment of this application. Unlike a normal complete connection procedure (for example, a procedure of initial Wi-Fi connection between the mobile phone and an original AP), only an eapol phase and a dhcp phase may be performed in fast connection in this embodiment of this application, but scanning, network selection, an authentication (auth) phase, and an association (assoc) phase may not be performed. This reduces time for self-healing Wi-Fi reconnection between the mobile phone and the original AP.

In some embodiments, after the mobile phone completes interaction with the AP at various phases by following the normal Wi-Fi connection procedure, step S711 is performed, that is, Wi-Fi connection is successful. When a Wi-Fi connection exception occurs between the mobile phone and the current AP, and Wi-Fi connection is not completed within the second timeout interval or another Wi-Fi connection failure (for example, an authentication (auth) failure, a client authentication response (eapol) failure, or a network protocol (dhcp) failure) is fed back, step S712 may be performed, that is, a connection exception event occurs.

According to the communication connection method provided in this embodiment of this application, after the terminal device is disconnected from the AP, whether the disconnection reason code, the signal strength, whether the AP is in the blacklist, and the like satisfy the self-healing reconnection conditions is determined. If the self-healing reconnection conditions are satisfied, the mobile phone performs self-healing connection to the current AP. In this way, the mobile phone restores the Wi-Fi connection between the mobile phone and the AP, thereby reducing impact of Wi-Fi disconnection on network use experience of the user. In addition, when it is learned that the current AP satisfies the self-healing reconnection conditions, or the mobile phone learns that the current disconnection reason code is the self-healing-supporting reason code, the mobile phone may intercept the Wi-Fi disconnection event, and does not transmit the Wi-Fi disconnection event to the UI side. Thus, the UI interface can always display the Wi-Fi signal indicator, reducing the user's perception of Wi-Fi disconnection and restoration within a short period of time, and improving use experience of the user.

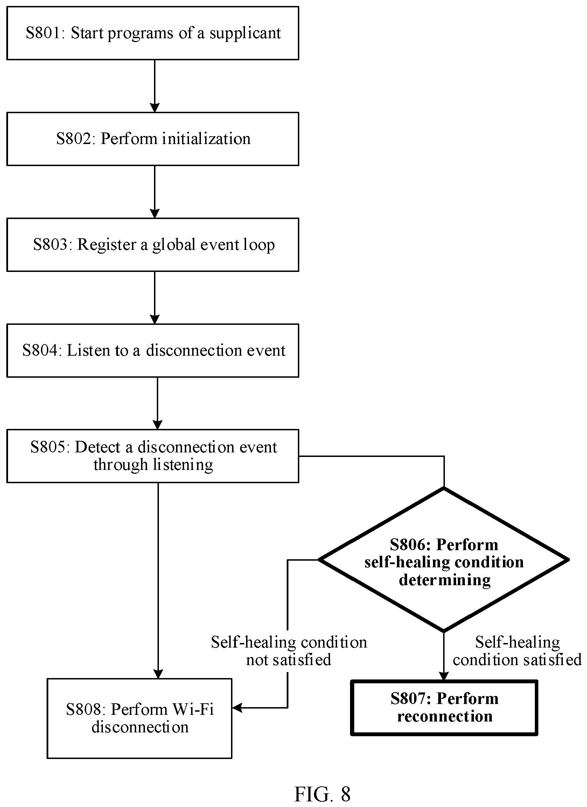

For a clearer understanding of the communication connection method provided in this embodiment of this application, the improved solution provided in this application and an unimproved solution are compared and differentiated below with reference to FIG. 8. For example, FIG. 8 is a schematic flowchart of another communication connection method according to an embodiment of this application.

S801: Start programs of a supplicant.

The programs of the supplicant may specifically include a program for listening to a disconnection event and/or a disconnection reason code, and a program for determining whether a disconnection reason code is a self-healing-supporting reason code. Used instruction code may include supplicant/main.cmain and wpa_supplicant_init_match.

S802: Perform initialization.

Initialization herein is specifically initialization of a supplicant framework state machine, including assignment of initial values to some variables, configuration file reading, initialization of an event loop linked list, and the like.

S803: Register a global event loop.

Global events may be a Wi-Fi disconnection event, and an event of determining whether a Wi-Fi disconnection event satisfies a self-healing reconnection condition, and performing self-healing reconnection if the self-healing reconnection condition is satisfied.

S804: Listen to a disconnection event.

In some embodiments, a mobile phone may listen to a disconnection event by using a Wi-Fi chipset. If there is a disconnection event, the disconnection event is transmitted to a Wi-Fi driver. The Wi-Fi driver may report, to the supplicant, the disconnection event or a reason code corresponding to the disconnection event.

S805: Detect a disconnection event through listening.

In some solutions, after the disconnection event is detected through listening, Wi-Fi disconnection is directly performed, that is, step S808 is directly performed. In the solution of this application, after the disconnection event is detected through listening, step S806 may be performed next, that is, self-healing condition determining is performed. For a self-healing condition determining process, refer to S702 to step S705 in the embodiment in the foregoing FIG. 7. Details are not described herein again.

When a self-healing condition determining result is that a self-healing condition is satisfied, step S807 may be performed next, that is, reconnection (or referred to as self-healing reconnection or fast connection) is performed between the mobile phone and a current AP. When a self-healing condition determining result is that a self-healing condition is not satisfied, step S808 is performed for Wi-Fi disconnection.

It can be understood that, unlike the solution in which Wi-Fi disconnection is directly performed after a disconnection event is detected through listening, in the communication connection method provided in this embodiment of this application, after the disconnection event is detected through listening, whether the disconnection event (or the reason code corresponding to the disconnection event) satisfies the self-healing reconnection condition is determined, that is, whether self-healing reconnection is supported is determined. If self-healing reconnection is supported, the mobile phone performs fast self-healing reconnection to the current AP. In this way, the mobile phone successfully reconnects to a Wi-Fi network of the current AP within a short period of time, reducing frequency of Wi-Fi disconnection.

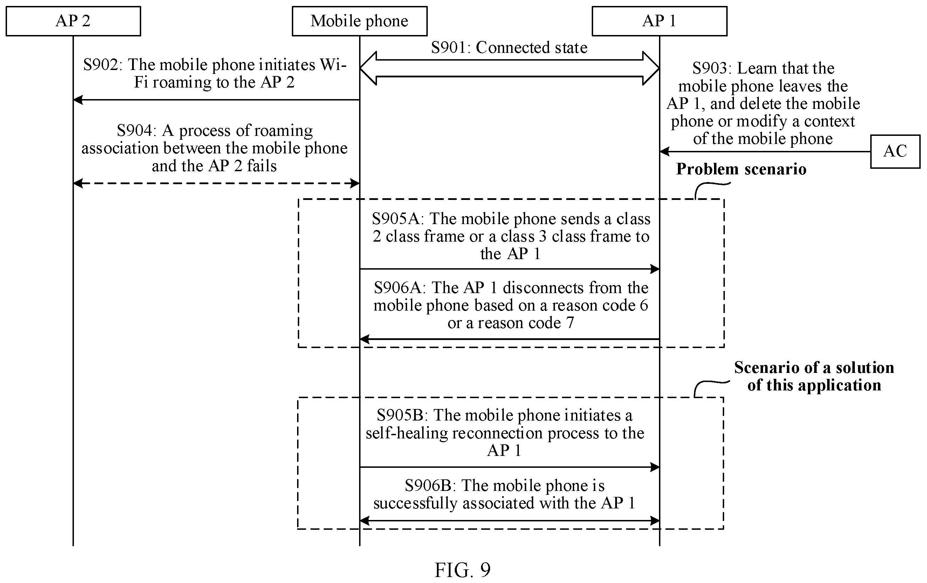

The communication connection method provided in this embodiment of this application is applicable to a Wi-Fi disconnection scenario. During actual application, Wi-Fi disconnection may occur in a plurality of service scenarios, for example, a Wi-Fi roaming scenario. For example, FIG. 9 is a diagram of a communication connection method applicable to a Wi-Fi roaming scenario according to an embodiment of this application.

In some scenarios, in a case that a mobile phone and an AP 1 remain in a connected state, and a WLAN chipset of the mobile phone attempts to roam to an AP 2, when the mobile phone is establishing a connection to the AP 2, an access controller AC learns that the mobile phone leaves the AP 1, and deletes the mobile phone from a device list of the AP 1 (as shown by step S903 in FIG. 9). If a process of associating the mobile phone with the AP 2 fails, and the mobile phone considers that the mobile phone still remains in the state of being connected to the AP 1, and if the mobile phone sends a frame to the AP 1 in this case, the AP 1 considers that the mobile phone is a nonauthenticated device and disconnects from the mobile phone (as shown by step S906A marked in a problem scenario in FIG. 9, the AP 1 sends a disconnection indication message to the mobile phone, where the message carries a reason code (which may be referred to as a reason code) 6 or 7). A user perceives that a Wi-Fi signal indicator disappears from an interface of the mobile phone. The Wi-Fi signal indicator reappears after successful Wi-Fi reconnection, which takes approximately 2 to 3 seconds. In this process, the user perceives Wi-Fi disconnection, affecting user experience. As shown in FIG. 9, in an embodiment of this application, if the mobile phone fails to perform roaming association with the AP 2, the WLAN chipset of the mobile phone may immediately initiate a procedure of reassociating with the original AP (that is, the AP 1) (as shown by step S905B marked in Embodiment 1 in FIG. 9, which may specifically include sending a reassociation request, and may further include receiving, by the mobile phone, a first response message that is from the AP 1 and that is in response to the reassociation request), so as to prevent disconnection that may be caused by unsynchronized statuses of the two ends. In this solution, the process of reconnection between the mobile phone and the original AP (the AP 1) may be completed by Wi-Fi chipset firmware, with a time overhead of approximately tens of milliseconds. The Wi-Fi signal indicator on the interface of the mobile phone may not disappear in the entire process (even if a control icon on a software program briefly disappears, there may be not enough time for interface switching within an extremely short period of time because switching of interface display takes some time; or even if interface switching is performed, a change in the interface within an extremely short period of time is not perceptible to the user visually). The user hardly perceives Wi-Fi disconnection in the entire process.

Still another communication connection method provided in this embodiment of this application is described below with reference to the embodiment in FIG. 9.

S901: The mobile phone and the AP 1 are in the connected state.

The AP 1 is an access network device (for example, a router) in the roaming scenario. The roaming scenario further includes the AP 2. The AP 1 and the AP 2 may provide a same access network service. For example, SSIDs of the AP 1 and the AP 2 are the same, and are both xxx-net. Wi-Fi network coverage areas of the AP 1 and the AP 2 partially overlap (as shown in FIG. 1 or FIG. 2).

In some embodiments, the mobile phone may be initially located in the Wi-Fi network coverage area of the AP 1; and a Wi-Fi connection has been established between the mobile phone and the AP 1, and the mobile phone and the AP 1 are in the connected state. For a process of establishing the Wi-Fi connection between the mobile phone and the AP 1, refer to an existing procedure. Details are not described herein.

S902: The mobile phone initiates Wi-Fi roaming to the AP 2.

In some embodiments, as the mobile phone moves, the mobile phone may gradually move away from the AP 1 and approach the AP 2. For a movement direction of the mobile phone, refer to, for example, a direction shown by an arrow in FIG. 1 or FIG. 2.

After moving to a particular location (for example, moving to critical areas of the Wi-Fi coverage areas of the AP 1 and the AP 2), the mobile phone may initiate Wi-Fi roaming to the AP 2. For a manner in which the mobile phone initiates roaming, refer to the foregoing descriptions. Details are not described herein again.

S903: When learning that the mobile phone leaves the AP 1, the radio controller AC deletes the mobile phone or modifies a context of the mobile phone.

In this case, the AP 1 does not include information about the mobile phone (for example, authentication information of the mobile phone), or the context of information about the mobile phone (for example, authentication information of the mobile phone) is modified. For the AP 1, the mobile phone becomes a nonauthenticated device.

S904: The process of roaming association between the mobile phone and the AP 2 fails.

It should be understood that when the process of roaming association between the mobile phone and the AP 2 fails, the mobile phone has been disconnected from the AP 1. For the AP 1, the mobile phone is considered as the nonauthenticated device.

For the problem scenario, after roaming association between the mobile phone and the AP 2 fails, re-interaction between the mobile phone and the AP 1 may include steps S905A and S906A.

S905A: The mobile phone sends a class 2 class frame or a class 3 class frame to the AP 1.

It should be understood that the mobile phone can successfully send the class 2 class frame to the AP 1 only after being successfully authenticated by the AP 1, or the mobile phone can successfully send the class 3 class frame to the AP 1 only after being successfully authenticated by and successfully associated with the AP 1. The class 2 class frame is used for connection management, and the class 3 class frame is used for data service transmission.

S906A: The AP 1 sends the disconnection indication message to the mobile phone.

The disconnection indication message indicates that the Wi-Fi connection between the AP 1 and the mobile phone drops.

In some embodiments, after receiving the class 2 class frame or the class 3 class frame sent by the mobile phone, the AP 1 may disconnect from the mobile phone based on the reason code 6 or the reason code 7.

In the problem scenario, the mobile phone is the nonauthenticated device for the AP 1. Therefore, when the mobile phone fails to perform roaming association with the AP 2 and re-interacts with the AP 1, the AP 1 returns the disconnection indication information to the mobile phone. In this case, Wi-Fi disconnection occurs for the mobile phone.

For a scenario corresponding to the solution of this application, after roaming association between the mobile phone and the AP 2 fails, re-interaction between the mobile phone and the AP 1 may include steps S905B and S906B.

S905B: The mobile phone sends the reassociation request message to the AP 1.

The reassociation request message is used to initiate connection to the AP 1 (that is, self-healing reconnection).

S906B: The mobile phone is successfully associated with the AP 1.

In some embodiments, after receiving the reassociation request message, the AP 1 may re-establish a Wi-Fi connection to the mobile phone in response to the message. For a manner of re-establishing the Wi-Fi connection between the mobile phone and the AP 1, refer to an existing procedure. Details are not described herein.

In the scenario corresponding to the solution of this application, after the mobile phone fails to perform roaming association with the AP 2, the mobile phone initiates reconnection to the AP 1, and exchanges service data with the AP 1 after being successfully authenticated again, instead of directly sending, to the AP 1, information that a nonauthenticated device cannot directly send successfully, such as a class 2 frame or a class 3 frame. In a process from disconnection between the mobile phone and the AP 1 to successful reconnection between the mobile phone and the AP 1, the interface of the mobile phone may continuously display the Wi-Fi signal indicator, so that the user does not perceive a short time of Wi-Fi disconnection.

In some other embodiments of this application, when the mobile phone is disconnected from the AP 1 due to a failure of roaming to the AP 2 by the mobile phone, and then disconnection triggers reporting of a reason code of Wi-Fi disconnection between the mobile phone and the AP 1 to an upper layer of the mobile phone (for example, an application processor of the mobile phone) by a WALN chipset (which may also be referred to as the Wi-Fi chipset), the mobile phone uses different processing manners for a part of reason codes that allow the mobile phone to perform fast reconnection for self-healing (this part of reason codes may be referred to as a first part of reason codes or self-healing-supporting reason codes, and the first part of reason codes may include at least one of 4, 6, 7, 8, 65529, or 65533), and for another part of reason codes that do not allow the mobile phone to perform fast reconnection for self-healing (the another part of reason codes may be referred to as a second part of reason codes or non-self-healing-supporting reason codes, and the second part of reason codes may be reason codes other than the first part of reason codes).

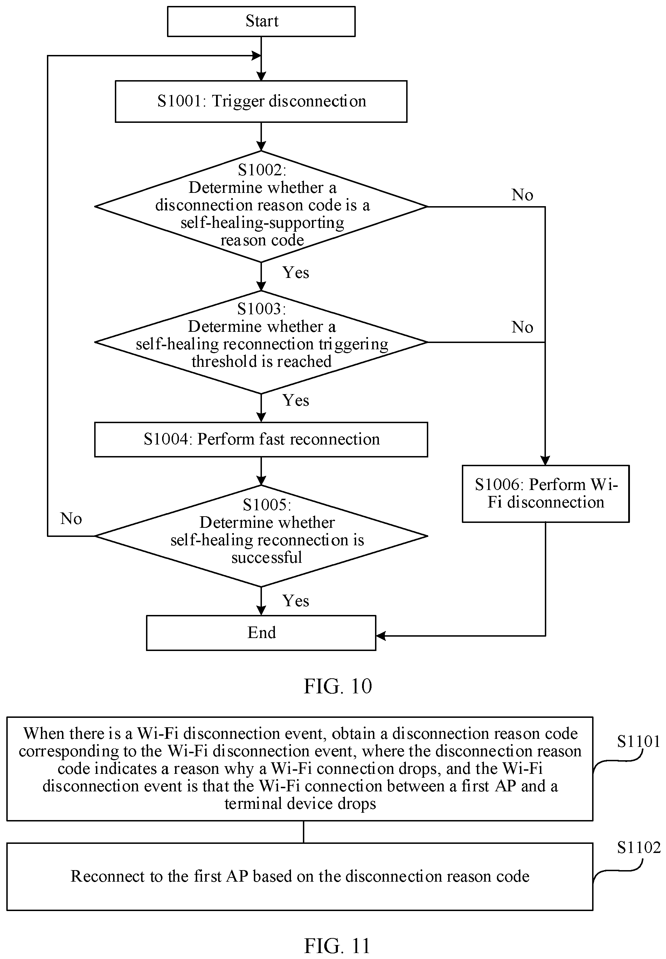

For example, as shown in FIG. 10, a mobile phone may further determine whether a current disconnection reason code is a reason code that can support self-healing. If the current disconnection reason code is not a reason code that can support self-healing, a normal disconnection procedure is performed for disconnection. If the current disconnection reason code is a reason code that can support self-healing (it is assumed that the current reason code is a first reason code that can support self-healing, that is, may be one of the first part of reason codes), determining continues to be performed. For example, whether a self-healing threshold is reached is determined (the self-healing threshold may be whether a signal strength of an AP exceeds a preset threshold, and may further include whether another parameter satisfies a preset condition). If the self-healing threshold is not reached, fast reconnection is not performed. Instead, the normal disconnection procedure is performed. If the self-healing threshold is reached, fast reconnection is performed for self-healing connection (for example, if a current signal strength of an AP 1 exceeds the preset threshold, a wlan chipset of a terminal may quickly reconnect to the AP 1, to quickly restore a connection between the two parties).

For example, FIG. 10 is a schematic flowchart of still another communication connection method according to an embodiment of this application. Specifically, the following steps may be included.

S1001: Trigger disconnection.

In some embodiments, triggering disconnection may be, for example, that a mobile phone obtains a disconnection event, or that a supplicant obtains a disconnection event and/or a disconnection reason code.

S1002: Determine whether the disconnection reason code is a self-healing-supporting reason code.

In this embodiment of this application, self-healing-supporting reason codes may also be described as a first part of reason codes.

If the disconnection reason code is the self-healing-supporting reason code, that is, a determining result of this step is "yes", step S1003 may be performed next. If the disconnection reason code is not the self-healing-supporting reason code, that is, a determining result of this step is "no", step S1006 may be performed next, that is, Wi-Fi disconnection is performed by following a normal procedure.

S1003: Determine whether the self-healing reconnection triggering threshold is reached.

The self-healing reconnection triggering threshold may include, for example, whether a Wi-Fi signal of a current AP received by the mobile phone is greater than a preset threshold, or whether the current AP is in a blacklist.

If the self-healing reconnection triggering threshold is reached, that is, a determining result of this step is "yes", step S1004 may be performed next. If the self-healing reconnection triggering threshold is not reached, that is, a determining result of this step is "no", step S1006 may be performed next, that is, Wi-Fi disconnection is performed by following the normal procedure.

S1004: Perform fast reconnection to the current AP.

For a process of fast reconnection herein, refer to an existing reconnection process. In some embodiments, the process of self-healing reconnection between the mobile phone and the current AP may not include operations such as scanning and channel selection, thereby reducing time for reconnection between the mobile phone and the AP.

S1005: Determine whether self-healing reconnection is successful.

If self-healing reconnection is successful, that is, a determining result of this step is "yes", the procedure ends. If self-healing reconnection is unsuccessful, that is, a determining result of this step is "no", step S1001 may continue to be performed next, that is, the disconnection event or the disconnection reason code is listened to, and step S1002 to step S1005 are performed again.

According to the communication connection method provided in this embodiment of this application, after the terminal device is disconnected from the AP, whether the disconnection reason code, the signal strength, whether the AP is in the blacklist, and the like satisfy the self-healing reconnection conditions is determined. If the self-healing reconnection conditions are satisfied, the mobile phone performs self-healing connection to the current AP. In this way, the mobile phone restores a Wi-Fi connection between the mobile phone and the AP, thereby reducing impact of Wi-Fi disconnection on network use experience of a user. In addition, when it is learned that the current AP satisfies the self-healing reconnection conditions, or the mobile phone learns that the current disconnection reason code is the self-healing-supporting reason code, the mobile phone may intercept the Wi-Fi disconnection event, and does not transmit the Wi-Fi disconnection event to a UI side. Thus, the UI interface can always display a Wi-Fi signal indicator, reducing the user's perception of Wi-Fi disconnection and restoration within a short period of time, and improving use experience of the user.

For example, FIG. 11 is a schematic flowchart of still another communication connection method according to an embodiment of this application. A procedure is applied to a terminal device, and may specifically include the following steps.

S1101: When there is a Wi-Fi disconnection event, obtain a disconnection reason code corresponding to the Wi-Fi disconnection event, where the disconnection reason code indicates a reason why a Wi-Fi connection drops, and the Wi-Fi disconnection event is that the Wi-Fi connection between a first AP and the terminal device drops.

S1102: Reconnect to the first AP based on the disconnection reason code.

In some embodiments, reconnecting to the AP based on the disconnection reason code specifically includes: determining whether the disconnection reason code is the self-healing-supporting reason code, where the self-healing-supporting reason code supports reconnection between the terminal device and the AP; and reconnecting to the first AP if the disconnection reason code is the self-healing-supporting reason code.

In some embodiments, reconnecting to the first AP if the disconnection reason code is the self-healing-supporting reason code further includes: if the disconnection reason code is the self-healing-supporting reason code, determining whether a received signal strength RSSI of the Wi-Fi is greater than a preset threshold; and if the received signal strength RSSI of the Wi-Fi is greater than the preset threshold, reconnecting to the first AP.

In some embodiments, the method further includes: determining whether the first AP is in a blacklist; and if the first AP is not in the blacklist, reconnecting to the first AP.

In some embodiments, the method further includes: during reconnection to the first AP, adding, to the blacklist, a service set identifier SSID and a basic service set identifier BSSID that correspond to the first AP.

In some embodiments, a quantity limit is set for the SSID in the blacklist, the quantity limit is a maximum quantity of first APs of the SSID that are added to the blacklist, and the method further includes: determining whether the SSID corresponding to the first AP is in the blacklist; if the SSID corresponding to the first AP is in the blacklist, determining whether the SSID in the blacklist reaches the quantity limit; if the quantity limit is not reached, determining whether the BSSID corresponding to the first AP is in the blacklist; and if the BSSID is not in the blacklist, reconnecting to the first AP.

In some embodiments, the method further includes: in a state of being connected to the first AP, failing in a process of roaming association with a second AP; and receiving a disconnection indication message sent by the first AP, where the disconnection indication message indicates that the Wi-Fi connection between the first AP and the terminal device drops.

In some embodiments, reconnecting to the first AP specifically includes: sending a reconnection request message to the first AP; and receiving a first response message that is sent by the first AP in response to the reconnection request message, where the first response message indicates to reconnect to the terminal device.

In some embodiments, the disconnection indication message includes the disconnection reason code.

According to the communication connection method provided in this embodiment of this application, after the terminal device is disconnected from the AP, whether the disconnection reason code, the signal strength, whether the AP is in the blacklist, and the like satisfy the self-healing reconnection conditions is determined. If the self-healing reconnection conditions are satisfied, a mobile phone performs self-healing connection to the current AP. In this way, the mobile phone restores the Wi-Fi connection between the mobile phone and the AP, thereby reducing impact of Wi-Fi disconnection on network use experience of a user. In addition, when it is learned that the current AP satisfies the self-healing reconnection conditions, or the mobile phone learns that the current disconnection reason code is the self-healing-supporting reason code, the mobile phone may intercept the Wi-Fi disconnection event, and does not transmit the Wi-Fi disconnection event to a UI side. Thus, the UI interface can always display a Wi-Fi signal indicator, reducing the user's perception of Wi-Fi disconnection and restoration within a short period of time, and improving use experience of the user.

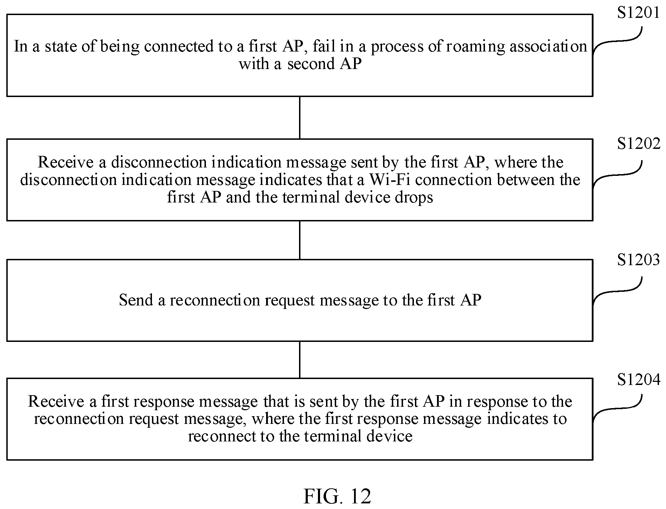

For example, FIG. 12 is a schematic flowchart of still another communication connection method according to an embodiment of this application. A procedure is applied to a terminal device, and may specifically include the following steps.

S1201: In a state of being connected to a first AP, fail in a process of roaming association with a second AP.

S1202: Receive a disconnection indication message sent by the first AP, where the disconnection indication message indicates that a Wi-Fi connection between the first AP and the terminal device drops.

S1203: Send a reconnection request message to the first AP.

S1204: Receive a first response message that is sent by the first AP in response to the reconnection request message, where the first response message indicates to reconnect to the terminal device.

In some embodiments, sending the reconnection request message to the first AP specifically includes: if the AP 1 satisfies a preset determining condition, sending the reconnection request message to the first AP, where the determining condition is used to determine whether to reconnect to the first AP.

In some embodiments, that the first AP satisfies the preset determining condition includes: the disconnection indication message sent by the first AP carries a disconnection reason code; and the disconnection reason code is a self-healing-supporting reason code, where the self-healing-supporting reason code supports reconnection between the terminal device and the AP.

In some embodiments, that the first AP satisfies the preset determining condition further includes: the first RSSI is greater than a preset threshold.

In some embodiments, that the first AP satisfies the preset determining condition further includes: the first AP is not in a blacklist.

According to the communication connection method provided in this embodiment of this application, in a roaming scenario, after the terminal device is disconnected from the AP, whether the disconnection reason code, the signal strength, whether the AP is in the blacklist, and the like satisfy the self-healing reconnection conditions is determined. If the self-healing reconnection conditions are satisfied, a mobile phone performs self-healing connection to the current AP. In this way, the mobile phone restores a Wi-Fi connection between the mobile phone and the AP, thereby reducing impact of Wi-Fi disconnection on network use experience of a user.

Based on the same technical concept, an embodiment of this application further provides a terminal device, including a processor and a memory. The memory stores a computer program, and the computer program includes instructions. When the instructions are executed by the processor, the terminal device is enabled to perform one or more steps of any one of the foregoing methods.

Based on the same technical concept, an embodiment of this application further provides a chip system. The chip system includes a processing circuit, a receiving pin, and a sending pin. The receiving pin, the sending pin, and the processing circuit communicate with each other through an internal connection path. The processing circuit performs one or more steps of any one of the foregoing methods, to control the receiving pin to receive a signal, and to control the sending pin to send a signal.

Based on the same technical concept, an embodiment of this application further provides a computer-readable storage medium. The computer-readable storage medium stores computer-executable program instructions. When the computer-executable program instructions are run on a computer, the computer or a processor is enabled to perform one or more steps of any one of the foregoing methods.

Based on the same technical concept, an embodiment of this application further provides a computer program product including instructions. The computer program product includes computer program code. When the computer program code is run on a computer, the computer or a processor is enabled to perform one or more steps of any one of the foregoing methods.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instruction is loaded and executed on a computer, all or some of the procedures or functions according to embodiments of this application are generated. The computer may be a general-purpose computer, a dedicated computer, a computer network, or another programmable apparatus. The computer instruction may be stored in a computer-readable storage medium, or transmitted by using the computer-readable storage medium. The computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures in the methods in the foregoing embodiments may be implemented by a computer program instructing related hardware. The program may be stored in a computer-readable storage medium. When this program is executed, the procedures in the foregoing method embodiments may be included. The storage medium includes any medium that can store program code, such as a ROM, a random access memory RAM, a magnetic disk, or an optical disc.

The foregoing descriptions are merely specific implementations of embodiments of this application, but the protection scope of embodiments of this application is not limited thereto. Any variation or replacement within the technical scope disclosed in embodiments of this application shall fall within the protection scope of embodiments of this application. Therefore, the protection scope of embodiments of this application shall be subject to the protection scope of the claims.

## Claims

1. A communication connection method, applied to a terminal device and comprising:
when there is a wireless fidelity Wi-Fi disconnection event, obtaining a disconnection reason code corresponding to the Wi-Fi disconnection event, wherein the disconnection reason code indicates a reason why the Wi-Fi connection drops, and the Wi-Fi disconnection event is that the Wi-Fi connection between a first radio access network device AP and the terminal device drops; and
reconnecting to the first AP based on the disconnection reason code.

2. The method according to claim 1, wherein reconnecting to the first AP based on the disconnection reason code specifically comprises:
determining whether the disconnection reason code is the self-healing-supporting reason code, wherein the self-healing-supporting reason code supports reconnection between the terminal device and the first AP; and
reconnecting to the first AP if the disconnection reason code is the self-healing-supporting reason code.

3. The method according to claim 1 or 2, wherein reconnecting to the first AP if the disconnection reason code is the self-healing-supporting reason code further comprises:
if the disconnection reason code is the self-healing-supporting reason code, determining whether a received signal strength RSSI of the Wi-Fi is greater than a preset threshold; and
if the received signal strength RSSI of the Wi-Fi is greater than the preset threshold, reconnecting to the first AP.

4. The method according to claim 2 or 3, wherein the method further comprises:
determining whether the first AP is in a blacklist; and
if the first AP is not in the blacklist, reconnecting to the first AP.

5. The method according to any one of claims 1 to 4, wherein the method further comprises:
during reconnection to the first AP, adding, to the blacklist, a service set identifier SSID and a basic service set identifier BSSID that correspond to the first AP.

6. The method according to claim 5, wherein a quantity limit is set for the SSID in the blacklist, the quantity limit is a maximum quantity of first APs of the SSID that are added to the blacklist, and the method further comprises:
determining whether the SSID corresponding to the first AP is in the blacklist;
if the SSID corresponding to the first AP is in the blacklist, determining whether the SSID in the blacklist reaches the quantity limit;
if the quantity limit is not reached, determining whether the BSSID corresponding to the first AP is in the blacklist; and
if the BSSID is not in the blacklist, reconnecting to the first AP.

7. The method according to any one of claims 1 to 6, wherein the method further comprises:
in a state of being connected to the first AP, failing in a process of roaming association with a second AP; and
receiving a disconnection indication message sent by the first AP, wherein the disconnection indication message indicates that the Wi-Fi connection between the first AP and the terminal device drops.

8. The method according to any one of claims 1 to 7, wherein reconnecting to the first AP specifically comprises:
sending a reconnection request message to the first AP; and
receiving a first response message that is sent by the first AP in response to the reconnection request message, wherein the first response message indicates to reconnect to the terminal device.

9. The method according to claim 7, wherein the disconnection indication message comprises the disconnection reason code.

10. The method according to any one of claims 1 to 9, wherein the method further comprises:
when there is the wireless fidelity Wi-Fi disconnection event, continuing to display a Wi-Fi signal indicator.

11. A communication connection method, applied to a terminal device and comprising:
in a state of being connected to a first AP, failing in a process of roaming association with a second AP;
receiving a disconnection indication message sent by the first AP, wherein the disconnection indication message indicates that a Wi-Fi connection between the first AP and the terminal device drops;
sending a reconnection request message to the first AP; and
receiving a first response message that is sent by the first AP in response to the reconnection request message, wherein the first response message indicates to reconnect to the terminal device.

12. The method according to claim 11, wherein sending the reconnection request message to the first AP specifically comprises:
if the AP 1 satisfies a preset determining condition, sending the reconnection request message to the first AP, wherein the determining condition is used to determine whether to reconnect to the first AP.

13. The method according to claim 12, wherein that the first AP satisfies the preset determining condition comprises:
the disconnection indication message sent by the first AP carries a disconnection reason code; and
the disconnection reason code is a self-healing-supporting reason code, wherein the self-healing-supporting reason code supports reconnection between the terminal device and the AP.

14. The method according to claim 13, wherein that the first AP satisfies the preset determining condition further comprises:
the first RSSI is greater than a preset threshold.

15. The method according to claim 12 or 13, wherein that the first AP satisfies the preset determining condition further comprises:
the first AP is not in a blacklist.

16. A terminal device, comprising:
a processor; and
a memory, wherein
the memory stores a computer program, the computer program comprises instructions, and when the instructions are executed by the processor, the terminal device is enabled to perform the method according to any one of claims 1 to 10 or claims 11 to 15.

17. A chip system, wherein the chip system comprises a processing circuit, a receiving pin, and a sending pin, wherein the receiving pin, the sending pin, and the processing circuit communicate with each other through an internal connection path, and the processing circuit performs the method according to any one of claims 1 to 10 or claims 11 to 15, to control the receiving pin to receive a signal, and to control the sending pin to send a signal.

18. A computer-readable storage medium, wherein the computer-readable storage medium stores computer-executable program instructions, and when the computer-executable program instructions are run on a computer, the computer is enabled to perform the method according to any one of claims 1 to 10 or claims 11 to 15.
